# EUROPÄISCHE PATENTSCHRIFT

(11) **EP 4 022 893 B1**
(45) Veröffentlichungstag und Bekanntmachung des Hinweises auf die Patenterteilung: **19.07.2023**
(21) Anmeldenummer: 20754252.3
(22) Anmeldetag: 11.08.2020
(51) Int. Cl.: H04N 13/211, H04N 13/214

(54) **KAMERAVORRICHTUNG ZUM ERZEUGEN VON RÄUMLICH DARSTELLENDEN BILDDATEN EINER UMGEBUNG**
CAMERA SYSTEM FOR GENERATING SPATIAL IMAGE DATA OF AN ENVIRONMENT
APPAREIL CAMÉRA POUR GÉNÉRER DES IMAGES SPATIALES D'UN ENVIRONNEMENT

(30) Priorität: 29.08.2019 DE 102019212989
(43) Veröffentlichungstag der Anmeldung: 06.07.2022
(73) Patentinhaber: AUDI AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/072493
(87) Internationale Veröffentlichungsnummer: WO 2021/037552

(56) Entgegenhaltungen:
- US-A1- 2012 038 749
- US-A1- 2017 255 813

## Beschreibung

Die Erfindung betrifft eine Kameravorrichtung zum Erzeugen von räumlich darstellenden Bilddaten einer Umgebung. Dabei geht um das korrekte Erfassen oder Aufnehmen von separaten Bilddaten oder Einzelbilddaten der Umgebung, aus denen anschließend die räumlich darstellenden Bilddaten und somit zum Beispiel ein stereoskopisches oder photogrammetrisches Abbild der Umgebung, erzeugt werden können.

Das Erfassen oder Erzeugen eines stereoskopischen Abbilds ist auch als Stereoskopie bekannt. Dazu werden von einem gewünschten Ausschnitt der Umgebung in der Regel wenigstens zwei Einzelbilddatensätze mit Fotographien aus unterschiedlichen Perspektiven erzeugt. Durch diese können somit zwei zweidimensionale Aufnahmen, die jeweils den Umgebungsausschnitts aus einer anderen Perspektive zeigen, bereitgestellt werden. Beim visuellen Überlagern der beiden Einzelbilddatensätze entstehen die räumlich darstellenden Bilddaten. Das resultierende stereoskopische Abbild zeigt also die Überlagerung der beiden zweidimensionalen Aufnahmen. Durch Nutzen einer speziellen Brille, einer sogenannten 3D-Brille, kann ein Beobachter das stereoskopische Abbild als dreidimensionales Abbild wahrnehmen.

Das Erzeugen oder Aufnehmen eines photogrammetrischen Abbilds oder Bilds der Umgebung, auch Photogrammmetrie genannt, ist ein bekanntes Verfahren, bei welchem eine räumliche Lage oder dreidimensionale Form einer Umgebung, insbesondere eines Objekts in der Umgebung bestimmt wird. Dazu werden analog zur Stereoskopie ebenfalls meist wenigstens zwei Einzelbilddatensätze der Umgebung aus unterschiedlichen Perspektiven erzeugt. Beim Überlagern dieser Bilddaten weist jeder Bildpunkt oder jedes Pixel der resultierenden räumlich darstellenden Bilddaten zusätzlich zu einer x- und y-Ausrichtung im zweidimensionalen Raum auch eine Tiefeninformation auf. Somit kann ein dreidimensionales Abbild der Umgebung dargestellt werden. Im Folgenden wird deshalb als Synonym für die Bezeichnung photogrammetrisch auch die Bezeichnung dreidimensional (3D) verwendet.

Das heißt, die räumlich darstellenden Bilddaten stellen, insbesondere für einen Beobachter des resultierenden Abbilds, eine Tiefeninformation oder einen räumlichen oder dreidimensionalen Eindruck der abgebildeten Umgebung bereit.

Zum Erzeugen der räumlich darstellenden Bilddaten werden in der Regel spezielle Kameras oder Messkameras eingesetzt. Diese Messkameras werden an unterschiedlichen voneinander entfernt liegenden Positionen aufgestellt und haben somit eine jeweils unterschiedliche Perspektive, also eine von der jeweiligen Position abhängende Blickrichtung auf das gewünschte Objekt in der Umgebung. Mittels der Messkameras kann nun insbesondere gleichzeitig das gewünschte Objekt aus den unterschiedlichen Perspektiven aufgenommen werden und anschließend zu den räumlich darstellenden Bilddaten zusammengesetzt werden. Insbesondere bei einer bewegten Szene, also einem sich bewegenden Objekt, ist diese Methode besonders in Bezug auf die entstehenden Kosten sehr aufwändig. Weiterhin wäre das resultierende Abbild verschwommen oder verzerrt. Zudem wird für den Aufbau oder die Anordnung der Messkameras zueinander in der Regel viel Raum oder Platz benötigt, da eine Stereobreite oder Tiefeninformation, das heißt eine Bildtiefe, des resultierenden Abbilds über einen Abstand der einzelnen Messkameras bestimmt wird und mit einer Entfernung zu dem gewünschten Objekt zusammenhängt.

Eine günstigere Methode die räumlich darstellenden Bilddaten aufzunehmen ist es, eine einzelne Messkamera zu nutzen. Mit dieser einzelnen Messkamera werden dann aus unterschiedlichen Positionen, also aus unterschiedlichen Perspektiven, Bilder des gewünschten Objekts in der Umgebung aufgenommen. Aus den einzelnen Bildern wird anschließend das stereoskopische oder photogrammetrische Abbild des Objekts erzeugt. Hierbei ergibt sich jedoch der Nachteil, dass die Methode durch die Verschiebung der Messkamera langsam ist und eine Wiederholgenauigkeit in der Regel leidet. Die Szene, also das Objekt in der Umgebung muss nämlich für die verschiedenen Aufnahmen gleich bleiben, das heißt unbewegt sein.

In Zusammenhang mit stereoskopischen oder photogrammetrischen Abbildern ist aus der DE 10 2015 221 774 A1 ein optisches System bekannt, bei welchem ein Hologramm-Set genutzt wird, um ein zwei- oder dreidimensionales Bild zu erzeugen.

Zudem ist aus der US2005/0052714 A1 eine Darstellung einer Umwelt mittels holografischen Stereogrammen.

Bei dem genannten Stand der Technik geht es jedoch vielmehr um das Darstellen des Bildes für einen Beobachter anstelle des korrekten Erfassens von räumlich darstellenden Bilddaten um daraus das stereoskopische oder photogrammetrische Abbild zu erzeugen.

Außerdem ist aus der DE 2 223 381 A1 ein Verfahren und eine Vorrichtung zur Messung von Parallaxen bei photogrammetrischen Stereogeräten bekannt. Hierbei geht es jedoch vielmehr um Messen uns Auswerten von Stereobildern zur Höhenberechnung.

US2012/0038749 A1 offenbart ein stereoskopisches Kameramodul, das einen Lichtleiter und einen einzigen Bildsensor verwendet, aber dieses stereoskopische Kameramodul umfasst kein optisches Gitter,

Aufgabe der vorliegenden Erfindung ist es, eine Kameravorrichtung bereitzustellen, mittels derer beim Erzeugen von räumlich darstellenden Bilddaten einer Umgebung Kosten eingespart werden können und insbesondere bewegte Szenen, also bewegte Objekte in der Umgebung aufgenommen werden können.

Die Aufgabe wird durch die unabhängigen Patentansprüche gelöst. Vorteilhafte Weiterbildungen der Erfindung sind durch die abhängigen Patentansprüche, die vorliegende Beschreibung und die Figuren offenbart.

Die Erfindung betrifft eine Kameravorrichtung zum Erzeugen von räumlich darstellenden Bilddaten einer Umgebung. Durch diese kann beispielsweise ein stereoskopisches oder photogrammetrisches Abbild der Umgebung bereitgestellt werden. Anders ausgedrückt, geht es um eine stereoskopische oder photogrammetrische Auswertung der Umgebung mittels der Kameravorrichtung. Die räumlich darstellenden Bilddaten, im Folgenden auch 3D-Bilddaten genannt, können insbesondere durch Zusammenführen von Einzelbilddaten oder Einzelbilddatensätzen, welche beim Aufnehmen der Umgebung aus unterschiedlichen Perspektiven erzeugt werden, bereitgestellt sein. Das 3D-Bild kann beispielsweise durch Bildpunkte mit Tiefeninformation (Abstand zum Bildsensor) beschrieben sein. Um nun Kosten beim Erzeugen oder Bereitstellen des stereoskopischen oder photogrammetrischen Abbilds einzusparen, ist vorgesehen, dass die unterschiedlichen Einzelbilddaten, also die unterschiedlichen Bilder aus den verschiedenen Perspektiven, lediglich von einer Kamera, also einer Bilderfassungseinrichtung, erfasst werden, und somit insbesondere von demselben Bildsensor. Um zudem eine bewegte Szene, also ein bewegtes Objekt in der Umgebung aufnehmen zu können, weist die Kamera insbesondere mehrere örtlich zueinander versetzte Erfassungsbereiche, vorliegend auch Einkoppelbereiche genannt, für das Licht oder die optische Strahlung der Umgebung auf. Diese Erfassungsbereiche oder Lichterfassungsbereiche, lenken das Licht aus der Umgebung, also das Licht, welches von einem gewünschten oder abzubildenden Objekt in der Umgebung abgestrahlt wird, auf einen Lichteinfallsbereich um, welcher zum Beispiel durch eine Fläche einer abschließenden Linse oder abbildenden Optik der Bilderfassungseinrichtung bereitgestellt ist.

Um diese Lichtlenkung herbeizuführen, umfasst die Kameravorrichtung ein Trägermedium oder Lichtleitmedium, wie beispielsweise eine Glasplatte oder Glasscheibe, welches als Lichtleiter ausgebildet ist. Das heißt, das Trägermedium kann Licht mittels interner Reflektion, insbesondere mittels Totalreflexion, insbesondere ähnlich einem Glasfaserkabel, weiterleiten. An dem Trägermedium sind ein Einkoppelbereich und ein Auskoppelbereich angeordnet. Das Trägermedium trägt sozusagen den Einkoppelbereich und den Auskoppelbereich. Sowohl der Einkoppelbereich als auch der Auskoppelbereich weisen jeweils eine Ablenkstruktur auf, mittels derer Licht aus der Umgebung in das Trägermedium eingekoppelt beziehungsweise ausgekoppelt wird. Der Einkoppelbereich stellt somit einen der Lichterfassungsbereiche für die Bilderfassungseinrichtung dar. Hingegen kann der Auskoppelbereich als eine Schnittstelle zum Übertragen des Lichts an den Lichteinfallsbereich der Kamera dienen.

Zum Einkoppeln des Lichts weist der Einkoppelbereich die genannte Ablenkstruktur auf. Diese kann beispielsweise in Form eines optischen Gitters, auch Beugungsgitter genannt, ausgebildet sein. Die Ablenkstruktur ist dazu ausgebildet, Licht, dass aus der Umgebung auf den Einkoppelbereich fällt in das Trägermedium einzukoppeln. Einkoppeln bedeutet in diesem Zusammenhang, dass die Ablenkstruktur das Licht aus der Umgebung derart ablenkt oder umlenkt, dass es in ein Volumen des Trägermediums eindringt und dort an zumindest einer Grenzfläche des Trägermediums intern reflektiert wird. Das Trägermedium ist ausgebildet, das über den Einkoppelbereich eingekoppelte Licht mittels der internen Reflexion an den Auskoppelbereich zu übertragen. Trifft das übertragene Licht nun auf den Auskoppelbereich, kann die Ablenkstruktur des Auskoppelbereichs das übertragene Licht schließlich aus dem Trägermedium auskoppeln. Das heißt, die auskoppelnde Ablenkstruktur kann das übertragene oder weitergeleitete Licht insbesondere derart ablenken oder umlenken, dass das Licht beim Auftreffen auf die Ablenkstruktur nicht länger an der Grenzfläche des Trägermediums reflektiert, sondern stattdessen aus dem Trägermedium ausgekoppelt wird und somit aus dem Trägermedium austreten kann.

An dem Auskoppelbereich liegt die Bilderfassungseinrichtung an. Diese kann insbesondere eine eigene abbildende Optik mittels welche einfallendes Licht auf wenigstens einen Bildsensor abgebildet wird, umfassen. Weiterhin kann die Bilderfassungseirichtung auch eine Auswerteelektronik umfassen, also zum Beispiel wenigstens ein Rechengerät, welches zum Beispiel als ein Controller oder Mikrocontroller ausgebildet sein kann. Die Auswerteelektronik ist bevorzugt mit dem wenigstens einen Bildsensor gekoppelt und kann aus elektrischen Signale des Bildsensors, welche beim Auftreffen von Licht generiert werden, Bilddaten erzeugen. Die Bilderfassungseinrichtung ist somit dazu ausgebildet, dass aus dem Trägermedium ausgekoppelte Licht zu erfassen und daraus Bilddaten zu erzeugen, die mit den auf den Einkoppelbereich einfallendem Licht der Umgebung korreliert sind. Somit kann bei Auswerten der Bilddaten, das heißt, beim Rekonstruieren der Bilddaten zu einem Abbild, insbesondere ein scharfes, unverzerrtes Abbild der Umgebung oder des abzubildenden Objekts in der Umgebung, bereitgestellt werden. Vorzugsweise liegt der Auskoppelbereich dabei derart an der Bilderfassungseinrichtung an, dass der Auskoppelbereich insbesondere vollständig mit dem Lichteinfallsbereich Bilderfassungseinrichtung überlappt.

Bisher wurde beschrieben, wie Bilddaten eines Einzelbildes, also die genannten Einzelbilddaten der Umgebung aus einer einzelnen Perspektive erzeugt werden.

Um nun das dreidimensionale oder stereoskopische Abbild der Umgebung erzeugen zu können, weist die Kameravorrichtung wenigstens einen weiteren Einkoppelbereich für das Licht aus der Umgebung auf. Der wenigstens eine weitere Einkoppelbereich kann somit einen weiteren Lichterfassungsbereich für die Kameravorrichtung darstellen. Somit weist die Kameravorrichtung wenigstens zwei Lichterfassungsbereiche, das heißt, zwei oder mehr Lichterfassungsbereiche auf. Der wenigstens eine weitere Einkoppelbereich ist dabei bevorzugt jeweils örtlich getrennt von dem ersten Einkoppelbereich oder in einem anderen Abschnitt als der erste Einkoppelbereich an dem Trägermedium angeordnet. Somit kann mit den unterschiedlichen Einkoppelbereichen, die an unterschiedlichen Positionen auf dem Trägermedium angeordnet sind, die Umgebung aus unterschiedlichen Perspektiven erfasst werden. Im Folgenden kann der wenigstens eine weitere Einkoppelbereich abgekürzt auch als weiterer Einkoppelbereich bezeichnet, gemeint ist jedoch dennoch, dass auch mehr als nur ein weiterer, zum Beispiel auch zwei oder vier weitere Einkoppelbereiche an dem Trägermedium angeordnet sein können.

Entsprechend dem ersten Einkoppelbereich weist auch der wenigstens eine weitere Einkoppelbereich jeweils eine weitere Ablenkstruktur, zum Beispiel ein optisches Gitter, auf, die ausgebildet ist, Licht, das aus der Umgebung auf den jeweiligen weiteren Einkoppelbereich fällt, in das Trägermedium einzukoppeln. Wie zuvor in Bezug auf den ersten Einkoppelbereich beschrieben, ist das Trägermedium ausgebildet, auch das über den weiteren Einkoppelbereich eingekoppelte Licht mittels interner Reflexion an den Auskoppelbereich zu übertragen, das heißt an denselben Auskoppelbereich wie er bereits im Zusammenhang mit dem ersten Einkoppelbereich beschrieben wurde. Zudem ist die auskoppelnde Ablenkstruktur der Auskoppelbereichs ausgebildet, das übertragene Licht des weiteren Einkoppelbereichs, das auf den Auskoppelbereich fällt, aus dem Trägermedium auszukoppeln. Schließlich ist auch die Bilderfassungseinrichtung ausgebildet, dass aus dem Trägermedium ausgekoppelte Licht des jeweiligen weiteren Einkoppelbereichs zu erfassen und daraus jeweilige weitere Bilddaten, insbesondere weiter Einzelbilddaten, die mit dem auf den jeweiligen weiteren Einkoppelbereich einfallenden Licht der Umgebung korreliert sind, zu erzeugen. Somit kann mit nur einer Bilderfassungseinrichtung oder Kamera, Licht aus der Umgebung von mehr als einem Einkoppelbereich, also von wenigstens zwei Einkoppelbereichen, beispielsweise gleichzeitig oder nacheinander erfasst werden. Anschließend kann die Bilderfassungseinrichtung aus dem von den unterschiedlichen Einkoppelbereichen einfallenden Licht unterschiedliche Bilddaten oder Einzelbilddaten erzeugen oder generieren. Insbesondere wird in der Bilderfassungseinrichtung das Licht der unterschiedlichen Erfassungsbereiche von dem Auskoppelbereich auf dasselbe Areal des Bildsensors projiziert oder geworfen. Es muss also kein separates Areal pro Erfassungsbereich bereitgestellt werden.

Zum Erzeugen oder Bereitstellen des stereoskopischen oder photogrammetrischen Abbildes der Umgebung kann die Bilderfassungseinrichtung die unterschiedlichen Einzelbilddaten zusammenführen oder rekonstruieren und so die räumlich darstellenden Bilddaten erzeugen. Bevorzugt ist der Bilderfassungseinrichtung dazu eine jeweilige Position der unterschiedlichen Einkoppelbereiche auf dem Trägermedium bekannt. Das heißt, die Bilderfassungseinrichtung ist weiterhin ausgebildet, aus den unterschiedlichen Bilddaten, die mit dem Licht aus der Umgebung das auf die unterschiedlichen Einkoppelbereiche fällt, korreliert ist, das stereoskopische Abbild zu erzeugen. Dabei ist es jedoch vorteilhaft, wenn in der Bilderfassungseinrichtung die Information gespeichert ist, von welchem der unterschiedlichen Einkoppelbereiche das Licht aus der Umgebung übertragen oder weitergeleitet wurde. Das heißt, die Bilderfassungseinrichtung sollte das auf die unterschiedlichen Einkoppelbereiche einfallende Licht getrennt erfassen können.

Trifft nämlich das Licht aus der Umgebung gleichzeitig auf die Bilderfassungseinrichtung, insbesondere den wenigstens einen Bildsensor der Bilderfassungseinrichtung, würde sich das einfallende Licht der unterschiedlichen Einkoppelbereiche auf dem Bildsensor überlagern. Es würde somit zu einer Intensitätsüberlagerung der Lichtintensitäten des einfallenden Lichts der unterschiedlichen Einkoppelbereiche kommen. Es ist deshalb vorteilhaft, wenn das einfallende Licht der unterschiedlichen Einkoppelbereiche getrennt erfasst wird und somit auch die unterschiedlichen Bilddaten, also die Einzelbilddaten, zunächst getrennt erzeugt und anschließend erst zu den räumlich darstellenden Bilddaten überlagert werden. Zum Trennen des über die unterschiedlichen Einkoppelbereiche einfallenden Lichts weist die Kameravorrichtung deshalb zusätzlich eine Trenneinrichtung auf, die ausgebildet ist, das auf die unterschiedlichen Einkoppelbereiche einfallende Licht zu trennen. Das Trennen des einfallenden Lichts der unterschiedlichen Einkoppelbereiche kann dabei insbesondere zeitlich, das heißt, zeitlich gesehen nacheinander, also zeitlich sequenziell, oder frequenzselektiv, das heißt, nach Farben getrennt, erfolgen.

Zum Erzeugen der räumlich darstellenden Bilddaten kann insbesondere vorgesehen sein, dass die Bilderfassungseinrichtung die unterschiedlichen Bilddaten oder Einzelbilddaten stereoskopisch oder photogrammetrisch verarbeitet. Bei einem stereoskopischen Verarbeiten kann die Bilderfassungseinrichtung zum Beispiel das genannte Anaglyphenverfahren nutzen, bei welchem mit den unterschiedlichen Einkoppelbereichen erfasste Abbilder der Umgebung in Komplementärfarben eingefärbt und anschließend übereinander gedruckt werden. Mit einer entsprechenden speziellen Brille, einer so genannten 3D-Brille, kann ein Betrachter des resultierenden stereoskopischen Abbildes anschließend ein dreidimensionales Abbild der Umgebung wahrnehmen. Alternativ kann beispielsweise durch die Bilderfassungseinrichtung auch ein Linsenrasterbild erstellt werden.

Wie zuvor erwähnt, kann die jeweilige Ablenkstruktur des Auskoppelbereichs und der unterschiedlichen Einkoppelbereiche als optisches Gitter ausgebildet sein. In einer Ausführungsform ist deshalb vorgesehen, dass jeweilige Ablenkstruktur als zumindest ein optisches Gitter, insbesondere ein holografisches Oberflächengitter oder ein holografisches Volumengitter, bereitgestellt ist. In diesem Zusammenhang wird die Kameravorrichtung hier als HoloCam bezeichnet.

Ein Optisches Gitter, auch Beugungsgitter genannt, sowie dessen Wirkungsweise und Herstellungsverfahren ist allgemein bekannt. Grundsätzlich kann ein optisches Gitter als zumindest abschnittsweise periodische Strukturen, sogenannte Gitterstrukturen, in einem Substrat ausgebildet sein. Mittels der Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder Erhöhen einer Anzahl an Gitterebenen des optischen Gitters oder durch Anordnen mehrerer holografisches Volumengitter hintereinander bereitgestellt werden.

Als Material für das besagte Substrat zum Einarbeiten eines optischen Gitters eignet sich besonders Glas, zum Beispiel Quarzglas, insbesondere ein fotosensitives Glas. Alternativ kann auch ein Polymer, insbesondere ein Fotopolymer, oder eine Folie, insbesondere eine fotosensitive Folie, zum Beispiel aus Kunststoff oder organischen Stoffen verwendet werden. Zur Verwendung derartiger Substrate für die Kameravorrichtung, sollte zusätzlich beachtet werden, dass das Material, insbesondere in Substratform, lichtwellenleitende Eigenschaften aufweist. Substrate die eine Ablenkstruktur zum Beugen von Licht, beispielsweise in Form eines optischen Gitters aufweisen, können auch als holografisch-optische Elemente (HOE) bezeichnet werden. Mit derartigen HOEs können insbesondere die Eigenschaften von herkömmliche Linsen, Spiegel und Prismen nachgebildet werden. Vorteile von HOEs sind, dass sie im Gegensatz zu den konventionellen aus Glas oder Kunststoff gefertigten optischen Elementen leichter, wegen der nicht notwendigen Krümmung wesentlich flacher und zugleich transparent ausgebildet sein können.

Bevorzugt kann das Trägermedium selbst als HOE ausgebildet sein. Das heißt, der Einkoppelbereich und der Auskoppelbereich können einstückig mit dem Trägermedium ausgebildet sein und somit beispielsweise direkt in eine Oberflächenstruktur des Trägermediums eingearbeitet sein. Das heißt, die jeweilige Ablenkstruktur kann beispielsweise in die Oberfläche des Trägermediums geätzt oder gelasert sein.

Alternativ kann vorgesehen sein, dass das Trägermedium als ein separates Element zu dem Einkoppelbereich und dem Auskoppelbereich ausgebildet ist. Das heißt, Einkoppelbereich, Auskoppelbereich und Trägermedium können separat ausgebildet sein. Zum Beispiel können der Einkoppelbereich und der Auskoppelbereich wenigstens ein erstes Element bilden und das Trägermedium kann ein zweites Element bilden, an das ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie oder Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften.

Im Folgenden werden mögliche Ausgestaltungen der besagten Trenneinrichtung genauer beschrieben.

Das getrennte Erfassen des einfallenden Lichts könnte beispielsweise realisiert werden, indem mehr als ein Bildsensor genutzt wird. Das heißt, für jeden der unterschiedlichen Einkoppelbereiche wäre ein separater Bildsensor zum Erfassen des durch den jeweiligen Einkoppelbereich weitergeleiteten Lichts bereitgestellt. Der Auskoppelbereich könnte dann beispielsweise richtungsselektiv ausgebildet sein und das von den unterschiedlichen Einkoppelbereichen aus unterschiedlichen Richtungen übertragene Licht auch in Abhängigkeit von der Einfallsrichtung auf den dem jeweiligen Einkoppelbereich zugeordneten oder zugehörigen Bildsensoren ablenken Damit würde die Bilderfassungseinrichtung und somit auch die Kameravorrichtung jedoch einen erhöhten Bauraumbedarf aufweisen, da zu jedem Einkoppelbereich auch ein separater Bildsensor verbaut werden müsste. Deshalb ist in einer Ausführungsform der Erfindung vorgesehen, dass die Bilderfassungseinrichtung zum Erfassen des ausgekoppelten Lichts nur einen Bildsensor nutzt. Das heißt, das Licht aus der Umgebung, das auf die unterschiedlichen Einkoppelbereiche fällt, wird auf einen einzelnen Bildsensor umgelenkt oder übertragen. Dazu kann der Auskoppelbereich, insbesondere die auskoppelnde Ablenkstruktur ausgebildet sein, das von den unterschiedlichen Einkoppelbereichen übertragene Licht in Abhängigkeit von der Einfallsrichtung auf dem Auskoppelbereich immer in eine gleiche Richtung abzulenken. Zum Beispiel kann die auskoppelnde Ablenkstruktur als optisches Gitter mit mehreren unterschiedlichen Gitterebenen, die jeweils richtungsselektiv ausgebildet sind, für jeweils einen der unterschiedlichen Einkoppelbereiche bereitgestellt sein. Bei dieser Ausführungsform mit nur einem Bildsensor kann entweder vorgesehen sein, dass sich das auf die unterschiedlichen Einkoppelbereiche einfallende Licht auf dem Bildsensor überlagert oder dass das auf die unterschiedlichen Einkoppelbereiche einfallende Licht nacheinander, insbesondere zeitlich nacheinander, auf denselben Flächenbereich des Bildsensors auftrifft.

Damit bei der Überlagerung des auf die unterschiedlichen Einkoppelbereiche einfallenden Lichts beim Auftreffen auf den Bildsensor die zuvor beschriebene Intensitätsüberlagerung vermieden wird, kann in einer Ausführungsform vorgesehen sein, dass das Licht, das aus der Umgebung auf die unterschiedlichen Einkoppelbereiche fällt, bereits beim Einkoppeln in das Trägermedium nach Farben gefiltert wird. Das heißt, die Trenneinrichtung ist ausgebildet, das auf die unterschiedlichen Einkoppelbereiche einfallende Licht frequenzselektiv oder wellenlängenselektiv zu trennen. Anders ausgedrückt, kann das Licht, das aus der Umgebung auf die unterschiedlichen Einkoppelbereiche trifft, bereits durch die Einkoppelbereiche oder die einkoppelnden Ablenkstrukturen, nach Farben vorgefiltert werden.

Zudem ist in der Ausführungsform vorgesehen, dass der Bildsensor als Farbsensor ausgebildet ist. Das heißt, der Bildsensor kann beispielsweise als Bayer-Sensor ausgebildet sein, wobei dem Bildsensor ein Farbfilter oder Bayerfilter vorgeschaltet ist. Ein derartiger Farbfilter weist in der Regel einzelne Farbsensorelemente auf, die in einer Matrix zusammen angeordnet sind, wobei je ein Farbsensorelement das Licht für einen Pixel des Bildsensors filtert. Die Farbensensorelemente sind dabei frequenzselektiv, das heißt über jedes der Farbensensorelemente kann nur Licht einer vorbestimmten Wellenlänge auf den Bildsensor transmittieren. Beispielsweise können die Farbsensorelemente in Kategorien unterteilt sein, wobei eine erste Kategorie der Farbsensorelemente nur für rotes Licht durchlässig ist, eine zweite Kategorie der Farbsensorelemente nur für blaues Licht durchlässig ist und eine dritte Kategorie der Farbsensorelemente nur für grünes Licht durchlässig ist.

Um die Vorfilterung des einfallenden Lichts bereits an den unterschiedlichen Einkoppelbereichen zu realisieren, ist in einer weiteren Ausführungsform die jeweilige Ablenkstruktur der unterschiedlichen Einkoppelbereiche selbst frequenzselektiv ausgebildet. Das heißt, die jeweilige Ablenkstruktur lenkt nur Licht einer vorbestimmten Wellenlänge ab, sodass es in das Trägermedium eingekoppelt wird. Eine derartige Frequenzselektivität oder Wellenlängenselektivität ist dabei eine typische Eigenschaft von holografisch optischen Elementen, welche optische Gitter als Ablenkstrukturen für die Lichtlenkung nutzen. Fällt nun beispielsweise Weißlicht aus der Umgebung auf einen der jeweiligen Einkoppelbereiche, kann durch die jeweilige Ablenkstruktur nur der Lichtanteil des Lichts, also ein erster Anteil des Lichts, mit der vorbestimmten Wellenlänge von der jeweiligen Ablenkstruktur in einem bestimmten Beugungswinkel abgelenkt oder gebeugt werden. Licht, insbesondere der übrigen Anteil oder zweite Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Anteil des Lichts, welcher von der vorbestimmten Wellenlänge oder Optimalwellenlänge abweicht, kann folglich insbesondere ungehindert durch das Trägermedium propagieren. Dadurch kann von dem polychromatischen Licht, welches auf die jeweilige Ablenkstruktur trifft, insbesondere ein monochromatischer Lichtanteil abgespaltet werden. In vorteilhafterweise ist der Ablenkeffekt für die Optimalwellenlänge maximal und fällt zu längeren und kürzeren Wellenlängen hin, beispielsweise gemäß einer Gaußkurve ab, oder wird schwächer. Die vorbestimmten Wellenlängen, welche die jeweiligen Ablenkstrukturen ablenken, unterscheiden sich dabei voneinander. Das heißt, jede der Ablenkstrukturen lenkt Licht einer unterschiedlichen Wellenlänge ab. Somit kann ein erster der unterschiedlichen Einkoppelbereiche beispielsweise als Rotfilter ausgebildet sein, und nur rotes Licht ablenken. Hingegen kann ein zweiter der unterschiedlichen Einkoppelbereiche beispielsweise als Blaufilter ausgebildet sein, und somit nur blaues Licht ablenken. Schließlich kann ein dritter der unterschiedlichen Einkoppelbereiche beispielsweise als Grünfilter ausgebildet sein und somit nur grünes Licht ablenken.

Alternativ kann die Vorfilterung auch realisiert werden, indem jedem der unterschiedlichen Einkoppelbereiche selbst ein Farbfilter, beispielsweise aus eingefärbtem Glas, Kunststoff oder Gelatinefolien, vorgeschaltet wird. Ein derartiger Farbfilter kann Licht einer bestimmte Farbe, also einer bestimmter Wellenlänge passieren lassen.

In einer weiteren Ausführungsform kann zusätzlich vorgesehen sein, dass die Frequenzselektivität der Einkoppelbereiche mit der Frequenzselektivität des Farbbildsensors übereinstimmt. Anders ausgedrückt, kann zu jedem der Einkoppelbereiche ist eine Vielzahl an Farbesensorelementen des Farbbildsensors vorgesehen, welche gegenüber der selben Wellenlänge selektiv sind, also dieselbe Wellenlänge filtern, wie der jeweiligen Einkoppelbereich. Somit korrespondiert die vorbestimmte Wellenlänge, welche die jeweilige Ablenkstruktur der unterschiedlichen Einkoppelbereiche ablenkt mit einer jeweiligen Farbfilterwellenlänge des Farbbildsensors. Das heißt, die vorbestimmte Wellenlänge, die die erste der unterschiedlichen Wellenlängenbereiche ablenkt, entspricht der Wellenlänge, für welche eine erste Kategorie an Farbensensorelementen des Farbbildsensors durchlässig ist. Analog entspricht auch die vorbestimmte Wellenlänge, die der zweite der unterschiedlichen Einkoppelbereiche ablenkt, der Wellenlänge für die eine zweite Kategorie der Farbsensorelemente des Farbbildsensors durchlässig ist und so weiter.

Somit ist lediglich ein Bildsensor nötig, um die räumlich darstellenden Bilddaten und somit die dreidimensionale oder die stereoskopische Abbildung der Umgebung zu erzeugen. Obwohl das Licht, das auf die unterschiedlichen Einkoppelbereiche fällt, sich überlagert, können dennoch durch die Trennung des Lichts nach Farben, also die frequenzselektive Trennung durch die unterschiedlichen Einkoppelbereiche und den Farbbildsensor separate oder getrennte Bilddaten, also die genannte Einzelbilddaten der unterschiedlichen Einkoppelbereiche durch die Bilderfassungseinrichtung erzeugt werden.

Alternativ zu der farbselektiven oder frequenzselektiven Trennung des Lichts kann wie zuvor erwähnt auch eine zeitliche Trennung des auf die unterschiedlichen Einkoppelbereiche einfallenden Lichts vorgesehen sein, damit die Bilderfassungseinrichtung das einfallende Licht auf die unterschiedlichen Einkoppelbereiche getrennt erfassen kann und somit das photogrammetrische oder stereoskopische Abbild der Umgebung erzeugen kann. Mit anderen Worten ist die Trenneinrichtung ausgebildet, das auf die unterschiedlichen Einkoppelbereiche einfallende Licht zeitlich zu trennen. Das heißt, es kann ähnlich wie bei einem Zeitmultiplexverfahren vorgesehen sein, mehrere Daten verschiedener Sender, also das einfallende Licht der unterschiedlichen Einkoppelbereiche, zeitlich gesehen nacheinander über eine gemeinsame Leitung, das heißt über das Trägermedium, an einen Empfänger, also die Bilderfassungseinrichtung und insbesondere den Bildsensor der Bilderfassungseinrichtung, zu übertragen.

Zum zeitlichen Trennen des auf die Bilderfassungseinrichtung umgelenkten Lichts von den unterschiedlichen Einkoppelbereichen kann in einer weiteren Ausführungsform vorgesehen sein, dass die unterschiedlichen Einkoppelbereiche schaltbar ausgebildet sind. Das heißt, jeder der unterschiedlichen Einkoppelbereiche kann verschiedene Schaltzustände aufweisen. In einem ersten Schaltzustand kann der jeweiligen Einkoppelbereich insbesondere ausgebildet sein, das Licht, welches aus der Umgebung auf den jeweiligen Einkoppelbereich fällt, wie zuvor beschrieben abzulenken, sodass es in das Trägermedium eingekoppelt wird. In einem von dem ersten Schaltzustand unterschiedlichen zweiten Schaltzustand kann vorgesehen sein, dass der Einkoppelbereich vollständig lichtdurchlässig oder lichtundurchlässig ausgebildet sein kann, sodass das Einkoppeln in das Trägermedium vermieden wird.

Dazu kann die Kameravorrichtung beispielsweise eine Schalteinrichtung aufweisen, die ausgebildet ist, die unterschiedlichen Einkoppelbereiche in Abhängigkeit von einem Steuersignal zu schalten. Vorzugsweise schaltet die Schalteinrichtung die unterschiedlichen Einkoppelbereiche dabei zeitlich versetzt zueinander, also zeitlich nacheinander. Mittels der Schalteinrichtung kann somit zwischen einem eingeschalteten Schaltzustand und einem ausgeschalteten Schaltzustand der unterschiedlichen Einkoppelbereiche gewechselt werden. Mit eingeschaltetem Schaltzustand ist hierbei gemeint, dass die Einkoppelbereiche das einfallende Licht so ablenken, dass es in das Trägermedium eingekoppelt wird, wohingegen im ausgeschalteten Zustand das Einkoppeln des einfallenden Lichts vermieden wird. Zum Schalten der Einkoppelbereiche kann die Schalteinrichtung beispielsweise ausgebildet sein, ein elektrisches oder magnetisches Feld oder eine Temperatur an den zu schaltenden Einkoppelbereich bereitzustellen. Das heißt, zum Einstellen des eingeschalteten Schaltzustands kann beispielsweise ein erster Wert des elektrischen oder magnetischen Felds oder der Temperatur eingestellt werden und zum Einstellen des ausgeschalteten Schaltzustands kann beispielsweise ein zweiter Wert des elektrischen oder magnetischen Felds oder der Temperatur eingestellt werden. Die Schalteinrichtung kann somit beispielsweise wenigstens einen elektrischen Kondensator und/oder wenigstens eine elektrische Induktivität und/oder wenigstens ein Heizelement, wie einen Heizdraht, umfassen, die mittels einem Controller oder Mikrocontroller zum Bereitstellen des elektrischen oder magnetischen Felds oder der Temperatur ausgebildet sind.

Die unterschiedlichen Einkoppelbereiche können insbesondere selbstablenkend oder selbstsperrend ausgebildet sein. In diesem Zusammenhang bedeutet selbstablenkend, dass sich die unterschiedlichen Einkoppelbereiche im Ruhezustand, also ohne Ansteuern durch die Schalteinrichtung, im eingeschalteten Schaltzustand befinden. Sie können somit erst durch Ansteuern, also Anlegen des elektrischen oder magnetischen Felds oder Bereitstellen der Temperatur, in den ausgeschalteten Schaltzustand versetzt werden. Mit selbstsperrend ist hingegen gemeint, dass sich die unterschiedlichen Einkoppelbereiche im Ruhezustand, also ohne Ansteuern durch die Schalteinrichtung, im ausgeschalteten Schaltzustand befinden. Sie können somit erst durch Ansteuern, also Anlegen des elektrischen oder magnetischen Felds oder Bereitstellen der Temperatur, in den eingeschalteten Schaltzustand versetzt werden.

Durch das Wechseln zwischen den beiden Schaltzuständen wird somit eine Ablenkcharakteristik des jeweiligen Einkoppelbereichs verändert werden. Mit anderen Worten sind in dieser Ausführungsform die unterschiedlichen Einkoppelbereiche schaltbar ausgebildet, wodurch die Ablenkcharakteristik der unterschiedlichen Einkoppelbereiche änderbar ist.

Bevorzugt ist vorgesehen, dass die Einkoppelbereiche insbesondere derart zeitlich versetzt geschaltet werden, dass immer nur einer der unterschiedlichen Einkoppelbereiche aktiv ist. Das heißt, nur einer der unterschiedlichen Einkoppelbereiche ist aktiv, befindet sich also in dem eingeschalteten Schaltzustand und kann somit das Licht aus der Umgebung in das Trägermedium einkoppeln. Die übrigen der Einkoppelbereiche sind währenddessen inaktiv, befinden sich also in dem ausgeschalteten Schaltzustand, wodurch das Einkoppeln des Lichts in das Trägermedium vermieden wird.

In vorteilhafter Weise ist eine Ausleserate der Bilddaten aus dem Bildsensor mit der Schaltung der unterschiedlichen Einkoppelbereiche synchronisiert.

Somit ist der Bilderfassungseinrichtung bekannt, von welchem der Einkoppelbereiche die Bilddaten stammen, also aus welcher Perspektive die Umgebung erfasst wurde. Da die Verteilung der unterschiedlichen Einkoppelbereiche auf dem Trägermedium bekannt ist, kann somit die Szene oder die Umgebung dreidimensional, das heißt photogrammetrisch, oder stereoskopisch konstruiert werden.

Um die unterschiedlichen Einkoppelbereiche schaltbar auszubilden, kann in einer weiteren Ausführungsform eine schaltbare Verdunkelungsschicht vorgesehen sein. Als Verdunkelungsschicht kann beispielsweise eine Flüssigkristallschicht oder Flüssigkristallanordnung genutzt werden, bei der sich in Abhängigkeit von einer elektrischen Spannung, das heißt in Abhängigkeit von einem elektrischen Feld die Ausrichtung der Flüssigkristalle verändert. Durch die Veränderung der Ausrichtung kann somit die Durchlässigkeit der Flüssigkristallanordnung verändert werden. Alternativ kann auch eine elektrochrome Glasschicht, auch intelligentes Glas genannt, als Verdunkelungsschicht verwendet werden. Eine derartige Glasschicht kann ihre Lichtdurchlässigkeit durch Anlegen einer elektrischen Spannung oder durch Erwärmung, also durch Anlegen einer Temperatur verändern. Die elektrochrome Glasschicht ist somit ausgebildet, in Abhängigkeit von einem Schaltsignal der zuvor genannten Schalteinrichtung zwischen einem transparenten oder lichtdurchlässigen Zustand und einem opaken Zustand zu wechseln. Anders ausgedrückt ist in dieser Ausführungsform eine schaltbare Verdunkelungsschicht vorgesehen, sodass sich in Abhängigkeit von einem Schaltsignal der Verdunkelungsschicht die jeweilige Ablenkcharakteristik der unterschiedlichen Einkoppelbereiche ändert.

In einer alternativen Ausführungsform kann auch vorgesehen sein, dass die jeweilige Ablenkstruktur selbst schaltbar ausgebildet ist. Dazu kann die jeweilige Ablenkstruktur bevorzugt als optisches Gitter, insbesondere holografisch optisches Gitter ausgebildet sein. Schaltbare optische Gitter, insbesondere deren Wirkungsweise und Herstellungsverfahren sind allgemein bekannt. Bevorzugt kann vorgesehen sein, dass die jeweilige Ablenkstruktur beispielsweise in Abhängigkeit von einer elektrischen Spannung als Schaltsignal seine Ablenkcharakteristik verändert Mit anderen Worten ist in dieser Ausführungsform vorgesehen, dass die jeweilige Ablenkstruktur selbst schaltbar ausgebildet ist, sodass sich in Abhängigkeit von einem Schaltzustand der jeweiligen Ablenkstruktur die jeweilige Ablenkcharakteristik des zugehörigen Einkoppelbereichs ändert.

In einer besonders bevorzugten Ausführungsform sind wenigstens drei unterschiedliche Einkoppelbereiche vorgesehen. Die wenigstens drei Einkoppelbereiche sind bevorzugt auf dem Trägermedium angeordnet, sodass die Umgebung, oder das Objekt in der Umgebung aus drei unterschiedlichen Perspektiven erfasst werden kann. Somit kann besonders gut eine besonders tiefenscharfe photogrammetrische oder stereoskopische Abbildung der Umgebung erzeugt werden.

Im Folgenden sind Ausführungsbeispiele der Erfindung beschrieben. Hierzu zeigt:
- Fig. 1: eine schematische Darstellung einer Kameravorrichtung zum Erzeugen eines stereoskopischen oder photogrammetrischen Abbilds eines Objekts in der Umgebung der Kameravorrichtung;
- Fig. 2: eine schematische Darstellung von unterschiedlichen Bilddaten, welche das Objekt aus unterschiedlichen Perspektiven darstellen und eine Rekonstruktion der Bilddaten zu dem photogrammetrischen Abbilds des Objekts; und
- Fig. 3: eine schematische Darstellung einer Umlenkeinheit, anhand welcher eine Lichtlenkung mittel holografisch-optischer Element erklärt ist.

Bei den im Folgenden erläuterten Ausführungsbeispielen handelt es sich um bevorzugte Ausführungsformen. Bei den Ausführungsbeispielen stellen die beschriebenen Komponenten der Ausführungsformen jeweils einzelne, unabhängig voneinander zu betrachtende Merkmale dar.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale ergänzbar Die Erfindung ist durch die Ansprüche definiert.

In den Figuren bezeichnen gleiche Bezugszeichen jeweils funktionsgleiche Elemente.

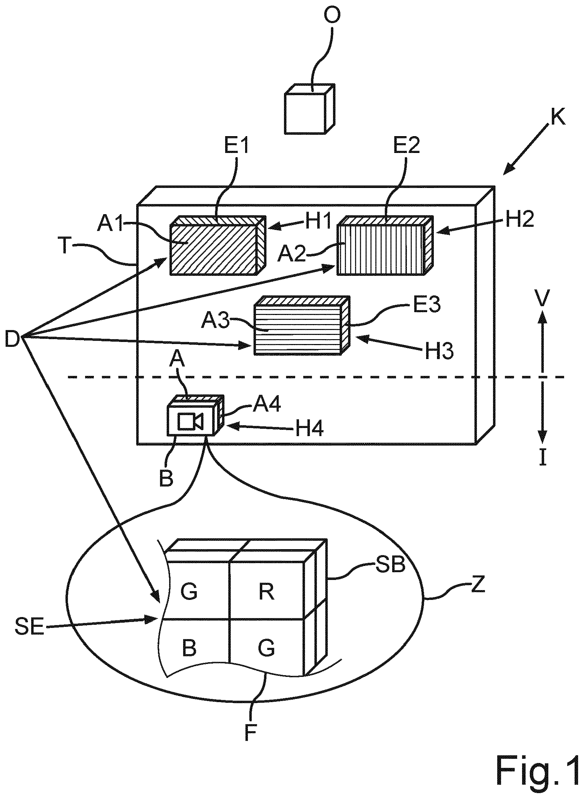

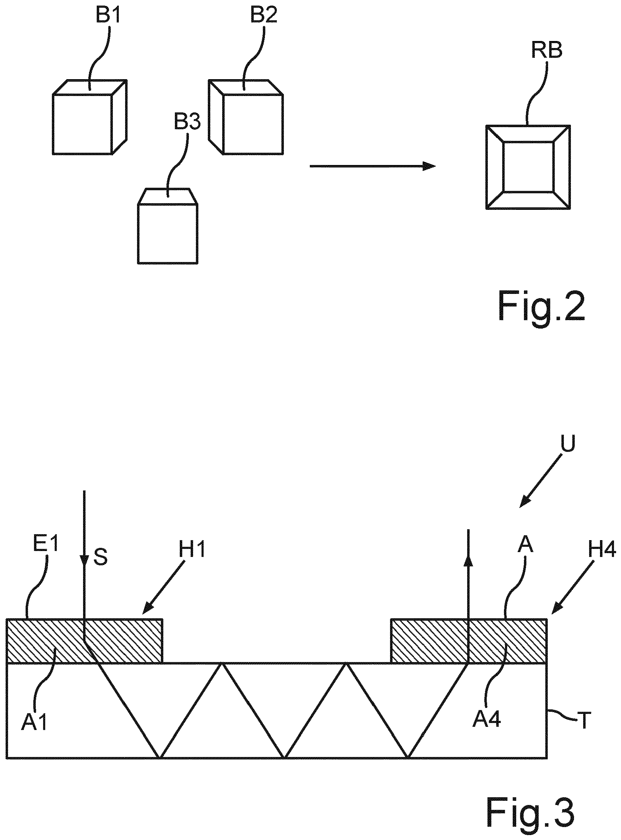

Fig. 1 zeigt eine Kameravorrichtung K zum Erzeugen von räumlich darstellenden Bilddaten durch die ein stereoskopisches oder photogrammetrisches Abbild RB einer Umgebung bereitgestellt werden kann. Beim Erzeugen oder Aufnehmen von einem derartigen stereoskopischen oder photogrammetrischen Bilde oder Abbild RB wird die Umgebung oder ein gewünschtes Objekt O in der Umgebung in der Regel aus unterschiedlichen Perspektiven erfasst. Aus jeder Perspektive werden somit unterschiedliche Bilddaten oder Einzelbilddaten B1, B2, B3 erzeugt, die jeweils ein unterschiedliches Bild oder Einzelbild der Umgebung darstellen oder abbilden. Wie in Fig. 2 gezeigt, können die Einzelbilddaten B1, B2, B3 anschließend zu den räumlich darstellenden Bilddaten zusammengesetzt werden durch die dann beispielsweise das gezeigte dreidimensionale oder photogrammetrische Abbild RB dargestellt werden kann. Durch die Kombination oder Überlagerung der Einzelbilddaten B1, B2, B3 umfasst das photogrammetrische Abbild RB somit zusätzlich zu einer x- und y- Ausrichtung, also einer zweidimensionalen Information, zusätzlich noch eine Tiefeninformation für jeden einzelnen Bildpunkt.

Um nun Kosten bei der Herstellung der Kameravorrichtung K zum Erzeugen des photogrammetrischen Abbilds RB einzusparen, ist es vorteilhaft, nur eine Bilderfassungseinrichtung B, die beispielsweise als Kamera, insbesondere als Fotokamera oder Videokamera mit einer abbildender Optik, ausgebildet ist, zu nutzen. Um zusätzlich auch bewegte Szenen, das heißt beispielsweise ein bewegtes Objekt O erfassen zu können, ohne eine Position der Kameravorrichtung K verändern zu brauchen, ist es weiterhin vorteilhaft, wenn die Kameravorrichtung K mehrere Erfassungsbereiche aufweist, mit denen das Objekt O aus unterschiedlichen Perspektiven erfasst werden kann. Die Erfassungsbereiche oder Einkoppelbereiche E1, E2, E3 werden zueinander versetzt, also räumlich getrennt voneinander an einem als Lichtleiter ausgebildeten Trägermedium T, wie zum Beispiel eine Glasplatte, angeordnet oder angebracht und übertragen das Licht aus der Umgebung an die gemeinsame Bilderfassungseinrichtung B. Es hat sich als besonders vorteilhaft erwiesen, diese Einkoppelbereiche E1, E2, E3 als holografisch optische Elemente H1, H2, H3, im Folgenden mit HOE abgekürzt, auszubilden.

HOEs sind bekannt als optische Bauelemente, die den physikalischen Effekt der Beugung nutzen, um verschiedene Varianten der Lichtlenkung herbeizuführen. Ein HOE weist dazu in der Regel ein fotosensitives Substrat, zum Beispiel eine Glasplatte oder Folie aus Kunststoff auf, in welches mittels eines diskreten Belichtungsmusters eine Gitterstruktur eingearbeitet wird. Dem HOE kann somit insbesondre mittels Belichtung eine optische Funktion eingeprägt werden. Durch die Gitterstruktur kann ein optisches Gitter bereitgestellt sein, an welchem Licht, das auf das optische Gitter trifft, unter Berücksichtigung von Interferenzerscheinungen, gebeugt oder abgelenkt wird. HOEs können insbesondere richtungsselektiv und frequenzselektiv gegenüber dem einfallenden Licht ausgebildet sein. Das heißt, die lenken bevorzugt nur Licht mit einem durch die Gitterstruktur bestimmten Einfallswinkel und einer durch die Gitterstruktur bestimmten Wellenlänge ab.

In Fig. 1 werden nun derartige HOEs H1, H2, H3 als die Einkoppelbereiche E1, E2, E3 genutzt, um Licht, welches von dem Objekt O auf die unterschiedlichen Einkoppelbereiche E1, E2, E3 fällt, aus drei unterschiedlichen Perspektiven zu erfassen und über ein weiteres HOE H4, welches einen Auskoppelbereich A darstellt, an die Bilderfassungseinrichtung B zu übertragen. Im Folgenden wird nun zunächst die Lichtlenkung mittels eines HOE beschrieben. Fig. 3 zeigt dazu eine Umlenkeinheit U, die ein Trägermedium T umfasst, welches beispielsweise als Glasplatte oder Polymerplatte ausgebildet sein kann, und an welchem entlang einer Längserstreckungsrichtung gesehen nacheinander ein einkoppelndes HOE H1 und ein auskoppelndes HOE H4 angeordnet sind. Mittels der Umlenkeinheit U kann Licht L, also insbesondere ein optischer Strahlengang des Lichts S umgelenkt und somit kann eine optische Achse des Lichts S verschoben werden. Das Licht S wird dazu mit dem einkoppelnden HOE H1 in das Trägermedium T eingekoppelt und von dem Trägermedium mittels interner Reflexion, insbesondere Totalreflexion an das HOE H4 weitergeleitet. Das einkoppelnde HOE H1 stellt somit insbesondere einen Einkoppelbereich E1 für das Licht S aus der Umgebung in das Trägermedium T dar, wohingegen das auskoppelnde HOE H4 einen Auskoppelbereich A für das Licht S aus dem Trägermedium T darstellt.

Um die Lichtlenkung zu ermöglichen umfasst das HOE H1 eine einkoppelnde Ablenkstruktur A1 und das HOE H2 eine auskoppelnde Ablenkstruktur A4. Die jeweilige Ablenkstruktur kann insbesondere als zumindest eines der zuvor beschriebenen optischen Gitter ausgebildet sein. Die einkoppelnde Ablenkstruktur A1 kann folglich dazu ausgebildet sein, das Licht S, das aus der Umgebung auf das einkoppelnde HOE H1 fällt, in das Trägermedium T einzukoppeln und dabei mittels Beugung an der Gitterstruktur des optischen Gitters umzulenken. Das eingekoppelte Licht S wird dann mittels interner Reflexion, insbesondere Totalreflexion, an den zur Umgebung ausgerichteten Grenzflächen des Trägermediums T reflektiert und somit von dem Einkoppelbereich E an den Auskoppelbereich A übertragen. Vorzugsweise weißt das Trägermedium T und die HOEs H1, H4 denselben Brechungsindex auf, sodass eine Lichtbrechung an den Grenzflächen zwischen den HOEs H1, H4 und dem Trägermedium T vermieden wird. Die auskoppelnde Ablenkstruktur A4 kann hingegen ausgebildet sein, das übertragene Licht S, das auf das auskoppelnde HOE H4 fällt, aus dem Trägermedium T auszukoppeln. In Fig.3 sind die HOEs H1, H4 beispielsweise als Volumenhologramme ausgebildet. Das heißt, die jeweilige Ablenkstruktur kann als holografisches Volumengitter in das Substrat des jeweiligen HOE H1, H4 eingearbeitet sein.

Diese Ausgestaltung der Umlenkeinheit U stellt jedoch lediglich eine beispielhafte Ausführungsform dar. Alternativ können der Einkoppelbereich E1 und der Auskoppelbereich A auch in einem gemeinsamen HOE ausgebildet sein. Weiterhin kann vorgesehen sein, dass das Trägermedium T selbst das HOE bildet. Dabei können der Einkoppelbereich E1 und der Auskoppelbereich A insbesondere in eine Oberfläche des Trägermediums T eingearbeitet sein. Das Trägermedium T kann somit jeweils ein holografisches Oberflächengitter als Einkoppelbereich E1 und Auskoppelbereich A aufweisen.

Die Kameravorrichtung K in Fig. 1 nutzt den zuvor beschrieben Effekt der Lichtlenkung mittels HOEs zum Erzeugen des photogrammetrischen Abbilds RB des Objekts O. Anstelle von nur einem Einkoppelbereich E1 weist die Kameravorrichtung K zum Aufnehmen des Objekts O aus unterschiedlichen Perspektiven jedoch drei Einkoppelbereiche, nämlich den ersten Einkoppelbereich E1, den zweiten Einkoppelbereich E2 und den dritten Einkoppelbereich E3 auf. Die drei Einkoppelbereiche E1, E2, E3 stellen somit die unterschiedlichen Erfassungsbereiche der Kameravorrichtung K dar. In Fig. 1 sind die unterschiedlichen Einkoppelbereiche E1, E2, E3 als separate HOEs H1, H2, H3 ausgebildet und an unterschiedlichen Positionen des Trägermediums T angebracht. Das Trägermedium T kann beispielsweise als Fensterscheibe in einem Kraftfahrzeug ausgebildet sein.

Um eine Lichtlenkung des von dem Objekt O erfassten Lichts hin zur Bilderfassungseinrichtung B zu ermöglichen, weist jeder der Einkoppelbereiche E1, E2, E3 eine jeweilige Ablenkstruktur A1, A2, A3 auf. Die jeweiligen Ablenkstrukturen A1, A2, A3 sind, wie zu Fig.3 beschrieben, bevorzugt als optische Gitter, insbesondere als holografische Volumengitter in ein Substrat eingearbeitet, wodurch das jeweilige HOE H1, H2, H3 gebildet ist. Mittels der jeweiligen Ablenkstruktur A1, A2, A3 kann nun jeder der Einkoppelbereiche E1, E2, E3 das Licht, welches von dem Objekt O auf den jeweiligen Einkoppelbereich E1, E2, E3 fällt, ablenken und dadurch in das Trägermedium T einkoppeln. Das Trägermedium T ist wie bereits erwähnt als Lichtleiter ausgebildet und kann somit das Licht mittels interner Reflexion an einen Auskoppelbereich A und somit an die Bilderfassungseinrichtung B weiterleiten.

Der Auskoppelbereich ist ebenfalls als HOE, H4, ausgebildet und weist als Ablenkstruktur A4 ebenfalls ein optisches Gitter auf, mittels welchem das durch das Trägermedium T übertragene Licht von den Einkoppelbereichen E1, E2, E3 auf den Auskoppelbereich A fällt, aus dem Trägermedium T auskoppeln. Bevorzugt ist die Ablenkstruktur A4 des Auskoppelbereichs A ebenfalls als holografisches Volumengitter ausgebildet.

Zum Erfassen des aus dem Ablenkstruktur A ausgekoppelten Lichts liegt die Bilderfassungseinrichtung B direkt an dem Auskoppelbereich A an. Insbesondere liegt die Bilderfassungseinrichtung B mit ihrem Lichteinfallsbereich direkt an dem Auskoppelbereich A an. Dabei ist eine Fläche des Lichteinfallsbereichs der Bilderfassungseinrichtung B insbesondere genau so groß wie eine Fläche des Auskoppelbereichs A, wobei der Lichteinfallsbereich und der Auskoppelbereich vollständig überlappend angeordnet sind.

Eine derartige Bilderfassungseinrichtung B weist in der Regel eine abbildende Optik in Form eines Objektivs auf, welches Licht, das über den Lichteinfallsbereich in die abbildende Optik fällt, auf einem Bildsensor SB abbildet. Der Bildsensor SB wandelt das auftreffende Licht in elektrische Signale um, welche anschließend von einer Auswerteeinrichtung der Bilderfassungseinrichtung B ausgelesen werden können. Eine Gesamtheit der elektrischen Signale eines Bildsensors SB können auch als Bilddaten oder Einzelbilddaten B1, B2, B3 bezeichnet werden. Somit ist die Bilderfassungseinrichtung B ausgebildet, das ausgekoppelte Licht des Auskoppelbereichs A zu erfassen und daraus die Einzelbilddaten B1, B2, B3 zu erzeugen. Wie in Fig. 2 gezeigt, zeigen die Einzelbilddaten B1, B2, B2 bei Rekonstruktion zu einem jeweiligen Abbild oder Einzelbild das Objekt O, aufgenommen aus den unterschiedlichen Perspektiven über den jeweiligen Einkoppelbereich E1, E2, E3. Zusammengesetzt ergeben die Einzelbilddaten B1, B2, B3 dann bei Zusammenführen zu einem gemeinsamen Bilddatensatz die räumlich darstellen Bilddaten. Die räumlich darstellenden Bilddaten stellen somit ein gemeinsames Abbild der überlagerten Einzelbildern, nämlich das photogrammetrische Abbild RB des Objekts O dar.

Um nun aus den unterschiedlichen Bilddaten oder Einzelbilddaten B1, B2, B3, welche aus dem einfallenden Licht der unterschiedlichen Einkoppelbereiche E1, E2, E3 erzeugt sind, das photogrammetrische Abbild RB bilden zu können, ist es vorteilhaft, wenn die Bilderfassungseinrichtung B, insbesondere der Bildsensor SB das auf der unterschiedlichen Einkoppelbereiche E1, E2, E3 einfallende Licht getrennt erfassen kann. Dazu weist die Kameravorrichtung K in Fig. 1 die Trenneinrichtung D auf. Die Trenneinrichtung dient dabei dem Trennen des auf die unterschiedlichen Einkoppelbereiche E1, E2, E3 einfallenden Lichts. Wäre die Trenneinrichtung D nicht vorhanden, würde das Licht aus der Umgebung von allen drei Einkoppelbereichen E1, E2, E3 gleichzeitig an den Bildsensor SB übertragen werden. Das übertragene Licht der unterschiedlichen Einkoppelbereiche E1, E2, E3 würde sich überlagern, sodass es insbesondere beim Auftreffen des überlagerten Lichts auf dem Bildsensor SB zu einer Intensitätsüberlagerung des Lichts kommen würde. Um dies zu vermeiden, ist die Trenneinrichtung D vorgesehen. In Fig. 1 ist die Trenneinrichtung als frequenzselektive Trenneinrichtung D ausgebildet. Sie dient also zur wellenlängenabhängigen oder farblichen Trennung des über die unterschiedlichen Einkoppelbereiche E1, E2, E3 übertragenen Lichts. Alternativ zu einer frequenzselektiven Trennung kann auch eine zeitliche Trennung des über die unterschiedlichen Einkoppelbereiche E1, E2, E3 übertragenen Lichts vorgesehen sein.

Um die frequenzselektive Trenneinrichtung D zu realisieren, sind wie in Fig. 1 gezeigt zwei Filtersysteme notwendig. Das erste Filtersystem betrifft einen Ausgestaltung der unterschiedlichen Einkoppelbereiche E1, E2, E3 und dabei insbesondere eine Struktur der jeweiligen Ablenkstrukturen A1, A2, A3. Hingegen betrifft das zweite Filtersystem eine Ausgestaltung des Bildsensors SB. Somit ist die frequenzselektive Trenneinrichtung D in Fig. 1 durch die jeweiligen Ablenkstrukturen A1, A2, A3 der Einkoppelbereiche E1, E2, E3 gebildet, sowie durch ein dem Bildsensor SB vorgeschaltetes Filterelement F.

In der Ausgestaltung der Kameravorrichtung K in Fig. 1 sind die jeweiligen Ablenkstrukturen A1, A2, A3 selbst frequenzselektiv ausgebildet. Das heißt, jede der Ablenkstrukturen A1, A2, A3 lenkt nur Licht einer vorbestimmten Wellenlänge ab. Die Wellenlängen, welche die unterschiedlichen Ablenkstrukturen A1, A2, A3 ablenken, unterscheiden sich insbesondere voneinander. Zum Beispiel kann die erste Ablenkstruktur A1 nur Licht einer ersten Wellenlänge, wie zum Beispiel rotes Licht, ablenken, die zweite Ablenkstruktur A2 kann nur Licht einer zweiten Wellenlänge, zum Beispiel blaues Licht ablenken und die dritte Ablenkstruktur A3 kann nur Licht einer dritten Wellenlänge, zum Beispiel grünes Licht ablenken. Die Ablenkstrukturen A1, A2, A3 dienen somit als Farbfilter für das auf die jeweiligen Einkoppelbereiche E1, E2, E3 einfallende Licht aus der Umgebung. Somit wird von der ersten Ablenkstruktur beispielsweise nur rotes Licht einer bestimmten Wellenlänge aus der Umgebung in das Trägermedium T eingekoppelt, von der zweiten Ablenkstruktur wird nur blaues Licht einer vorbestimmten Wellenlänge aus der Umgebung in das Trägermedium T eingekoppelt und von der dritten Ablenkstruktur A3 wird nur grünes Licht einer bestimmten Wellenlänge aus der Umgebung in das Trägermedium T eingekoppelt. Die jeweiligen Einkoppelbereiche E1, E2, E3 dienen somit als Vorfilter für das auf die Einkoppelbereiche E1, E2, E3 einfallende Licht aus der Umgebung. Im Gegensatz dazu kann die auskoppelnde Ablenkstruktur A4 des Auskoppelbereichs A Licht unabhängig von der Wellenlänge ablenken. Somit kann sichergestellt werden, dass das übertragene Licht der Einkoppelbereiche E1, E2, E3 tatsächlich aus dem Trägermedium T ausgekoppelt wird. Der Auskoppelbereich A, also das auskoppelnde HOE H4 kann dazu insbesondere als Mehrfachvolumenhologramm ausgebildet sein. Das heißt, das optische Gitter, durch welches die auskoppelnde Ablenkstruktur A4 gebildet ist, kann beispielsweise mehrere Gitterebenen aufweisen. Die Gitterebenen können jeweils eine unterschiedliche Gitterstruktur aufweisen, wobei jede der Gitterebenen Licht einer unterschiedlichen Wellenlänge beugt. Somit kann insgesamt durch den Auskoppelbereich A (poly-)chromatisches Licht, insbesondere in dem für den Menschen wahrnehmbaren Lichtspektrum, abgelenkt werden.

Damit nun die Bilderfassungseinrichtung B das von den Einkoppelbereichen E1, E2, E3 übertragene Licht beim gleichzeitigen Auftreffen auf den Bildsensor SB unterscheiden kann und somit auf die Perspektive, aus der das Objekt O aufgenommen wurde, zurückschließen kann, ist dem Bildsensor SB der Farbfilter F vorgeschaltet. Der Farbfilter F kann beispielsweise als Bayerfilter ausgebildet sein, bei welchem jedem Pixel P des Bildsensors SB ein Farbsensorelement SE des Filters F zugeordnet oder vorgeschaltet ist. Jedes Farbsensorelement SE dient als Filter für Licht einer vorbestimmten Wellenlänge. Bei einem Bayerfilter sind die Sensorelemente SE in der Regel in einer sich wiederholenden 4x4 Matrix aus zwei grünen Farbesensorelementen G, einem roten Farbesensorelement R und einem blauen Farbesensorelement B gebildet. Die grünen Farbesensorelemente G sind dabei nur für grünes Licht einer bestimmten Wellenlänge durchlässig, das roten Farbesensorelement R ist nur für rotes Licht einer bestimmten Wellenlänge durchlässig und das blaue Farbesensorelement B ist nur für blaues Licht einer bestimmten Wellenlänge durchlässig. Die Vergrößerung Z der Bilderfassungseinrichtung B in Fig.1 zeigt den Bildsensor SB mit dem vorgeschalteten Farbfilter F. Alternativ zu der in Fig. 1 gezeigten Ausgestaltung des Farbfilter F als Bayerfilter kann auch ein anderer Farbfilter F, wie zum Beispiel ein Foveon X3-Filter oder X-Trans- Filter ausgebildet sein.

Vorzugsweise entspricht die Filterwellenlänge, also eine jeweiligen Wellenlänge, gegenüber welcher das jeweilige Sensorelement SE durchlässig ist, der korrespondierenden Wellenlänge, welche durch die jeweilige Ablenkstruktur A1, A2, A3 abgelenkt wird. Das heißt, die erste Ablenkstruktur A1 lenkt beispielsweise nur rotes Licht einer bestimmten Wellenlänge ab und das rote Sensorelement R ist nur für dieses rote Licht mit der bestimmten Wellenlänge durchlässig. Entsprechend lenkt die zweite Ablenkstruktur A2 beispielsweise nur blaues Licht einer bestimmten Wellenlänge ab und das blaue Sensorelement B ist nur für dieses blaue Licht mit der bestimmten Wellenlänge durchlässig. Ebenso kann die dritte Ablenkstruktur A3 nur grünes Licht einer bestimmten Wellenlänge ablenken und das grüne Sensorelement G ist nur für dieses grüne Licht mit der bestimmten Wellenlänge durchlässig.

Durch die beiden Farbfiltersysteme, nämlich die Ausgestaltung der Ablenkstrukturen A1, A2, A3 und den Farbfilter F kann somit das Licht, welches von den jeweiligen unterschiedlichen Einkoppelbereichen E1, E2, E3 übertragen wird, zwar farblich getrennt an die Bilderfassungseinrichtung B übertragen werden und dennoch gleichzeitig von der Bilderfassungseinrichtung B, insbesondere dem Bildsensor SB der Bilderfassungseinrichtung B erfasst werden. Durch die frequenzselektive Trenneinrichtung D können, somit wie in Fig. 2 gezeigt unterschiedlich Bilddaten B1, B2, B3, die mit dem einfallenden Licht auf den Einkoppelbereiche E1, E2, E3 korrespondieren, erzeugt werden. Durch die Bilderfassungseinrichtung B können die unterschiedlichen Bilddaten oder Einzelbilddaten B1, B2, B3 anschließend überlagert werden und zu dem photogrammetrischen Abbild RB des Objekts O in der Umgebung rekonstruiert werden. Die Bilderfassungseinrichtung B ist somit zur photogrammetrischen Erfassung und Auswertung der Umgebung ausgebildet.

In Fig. 2 ist beispielhaft die Rekonstruktion der Einzelbilddaten B1, B2, B3 zu den räumlich darstellen Bilddaten durch die ein photogrammetrisches oder dreidimensionales Abbild RB des Objekts O dargestellt beschreiben. Wie zuvor erwähnt ist jedoch auch eine Rekonstruktion zu räumlich darstellen Bilddaten möglich, durch die ein stereoskopische Abbild des Objekts O bereitgestellt ist.

Eine derartige Kameravorrichtung K könnte dabei beispielsweise zur Innenraumerfassung eines Kraftfahrzeugs eingesetzt werden. Als Trägermedium T kann dabei eine Fensterscheibe des Kraftfahrzeugs dienen. Mit der Kameravorrichtung K kann somit ein Innenraum des Kraftfahrzeugs erfasst und ausgewertet werden. Somit kann die Kameravorrichtung K beispielsweise zur Erfassung von Gesten eines Insassen des Kraftfahrzeugs genutzt werden. Besonders bevorzugt können die HOEs H1, H2, H3, durch welche die Einkoppelbereiche E1, E2, E3 bereitgestellt sind, transparent ausgebildet sein. Dadurch können sie in einem sichtbaren Bereich, nämlich beispielsweise mittig an einer Frontscheibe des Kraftfahrzeugs angeordnet sein, ohne ein Sichtfeld eines Insassen zu stören oder zu behindern. Ein intransparenter Teil der Kameravorrichtung K, nämlich derjenige Teil welcher die Bilderfassungseinrichtung B umfasst, kann insbesondere in einer Verkleidung des Kraftfahrzeugs, wie etwa in einem Türrahmen verbaut sein.

Insgesamt zeigen die Beispiele, wie eine Umgebung photogrammetrisch oder stereoskopisch insbesondere über einen Bildsensor und mehrere holografisch optische Elemente (HOE) erzeugt werden kann.

## Patentansprüche

1. Kameravorrichtung (K) zum Erzeugen von räumlich darstellenden Bilddaten einer Umgebung, umfassend
ein Trägermedium (T), welches als Lichtleiter ausgebildet ist, und an welchem ein Einkoppelbereich (E1) und ein Auskoppelbereich (A) angeordnet sind, wobei
der Einkoppelbereich (E1) eine Ablenkstruktur (A1) aufweist, die ausgebildet ist, Licht (S), das aus der Umgebung auf den Einkoppelbereich (E1) fällt, in das Trägermedium (T) einzukoppeln,
das Trägermedium (T) ausgebildet ist, das über den Einkoppelbereich (E1) eingekoppelte Licht (S) mittels interner Reflexion an den Auskoppelbereich (A) zu übertragen, und
der Auskoppelbereich (A) eine auskoppelnde Ablenkstruktur (A4) aufweist, die ausgebildet ist, das übertragene Licht (S), das auf den Auskoppelbereich (A) fällt, aus dem Trägermedium (T) auszukoppeln, und an dem Auskoppelbereich (A) eine Bilderfassungseinrichtung (B) anliegt, die ausgebildet ist, das aus dem Trägermedium (T) ausgekoppelte Licht (S) zu erfassen und daraus Bilddaten (B1), die mit dem auf den Einkoppelbereich (E1) einfallenden Licht (S) der Umgebung korreliert sind, zu erzeugen,
wobei
an dem Trägermedium (T) wenigstens ein weiterer Einkoppelbereich (E2, E3) angeordnet ist, der jeweils eine weitere Ablenkstruktur (A2, A3) aufweist, die ausgebildet ist, Licht (S), das aus der Umgebung auf den jeweiligen weiteren Einkoppelbereich (E2, E3) fällt, in das Trägermedium (T) einzukoppeln,
das Trägermedium (T) ausgebildet ist, das über den jeweiligen weiteren Einkoppelbereich (E2, E3) eingekoppelte Licht (S) mittels interner Reflexion an den Auskoppelbereich (A) zu übertragen,
die auskoppelnde Ablenkstruktur (A4) ausgebildet ist, das übertragene Licht (S), das auf den Auskoppelbereich (A) fällt, aus dem Trägermedium (T) auszukoppeln,
die Bilderfassungseinrichtung (B) ausgebildet ist, das aus dem Trägermedium (T) ausgekoppelte Licht (S) des jeweiligen weiteren Einkoppelbereichs (E2, E3) zu erfassen und daraus jeweilige weitere Bilddaten (B2, B3), die mit dem auf den jeweiligen weiteren Einkoppelbereich (E2, E3) einfallenden Licht (S) der Umgebung korreliert sind, zu erzeugen, und die Bilderfassungseinrichtung (B) weiterhin ausgebildet ist, aus den unterschiedlichen Bilddaten (B1, B2, B3), die räumlich darstellenden Bilddaten zu erzeugen,
**dadurch gekennzeichnet, dass**
die Kameravorrichtung (K) zudem eine Trenneinrichtung (D) umfasst, die ausgebildet ist, das auf die unterschiedlichen Einkoppelbereiche (E1, E2, E3) einfallende Licht (S) zu trennen und hierdurch die Bilderfassungseinrichtung (B) das auf die unterschiedlichen Einkoppelbereiche (E1, E2, E3) einfallende Licht (S) getrennt erfasst, wobei als jeweilige Ablenkstruktur (A1, A2, A3, A4) zumindest ein optisches Gitter, insbesondere ein holografisches Oberflächengitter oder ein holografisches Volumengitter, bereitgestellt ist.

2. Kameravorrichtung (K) nach Anspruch 1,
**dadurch gekennzeichnet, dass**
die Bilderfassungseinrichtung (B) zum Erfassen des ausgekoppelten Lichts (S) einen Bildsensor (SB) nutzt, auf welchem sich das auf die unterschiedlichen Einkoppelbereiche (E1, E2, E3) einfallende Licht (S), überlagert, oder auf welchem das auf die unterschiedlichen Einkoppelbereiche (E1, E2, E3) einfallende Licht (S) nacheinander auf denselben Flächenbereich auftrifft.

3. Kameravorrichtung (K) nach Anspruch 2,
**dadurch gekennzeichnet, dass**
die Trenneinrichtung (D) ausgebildet ist, das auf die unterschiedlichen Einkoppelbereiche (E1, E2, E3) einfallende Licht (S) frequenzselektiv zu trennen und der Bildsensor als Farbbildsensor ausgebildet ist.

4. Kameravorrichtung (K) nach Anspruch 3,
**dadurch gekennzeichnet, dass**
die jeweilige Ablenkstruktur (A1, A2, A3) der unterschiedlichen Einkoppelbereiche (E1, E2, E3) frequenzselektiv ausgebildet ist, und somit jede der Ablenkstrukturen (A1, A2, A3) nur Licht (S) einer zu den übrigen Ablenkstrukturen (A1, A2, A3) unterschiedlichen vorbestimmten Wellenlänge ablenkt.

5. Kameravorrichtung (K) nach Anspruch 3 und 4,
**dadurch gekennzeichnet, dass**
die vorbestimmte Wellenlänge, welche die jeweilige Ablenkstruktur (A1, A2, A3) der unterschiedlichen Einkoppelbereiche (E1, E2, E3) ablenkt, mit einer jeweiligen Farbfilterwellenlänge des Farbbildsensors korrespondiert.

6. Kameravorrichtung (K) nach einem der Ansprüche 1 bis 2,
**dadurch gekennzeichnet, dass**
die Trenneinrichtung (D) ausgebildet ist, das auf die unterschiedlichen Einkoppelbereiche (E1, E2, E3) einfallende Licht (S) zeitlich zu trennen.

7. Kameravorrichtung (K) nach Anspruch 6,
**dadurch gekennzeichnet, dass**
die unterschiedlichen Einkoppelbereiche (E1, E2, E3) schaltbar ausgebildet sind und hierdurch eine Ablenkcharakteristik der unterschiedlichen Einkoppelbereiche (E1, E2, E3) änderbar ist.

8. Kameravorrichtung (K) nach Anspruch 6 oder 7,
**dadurch gekennzeichnet, dass**
eine schaltbare Verdunkelungsschicht vorgesehen ist, oder die jeweilige Ablenkstruktur (A1, A2, A3) selbst schaltbar ausgebildet ist, sodass sich in Abhängigkeit von einem Schaltzustand der Verdunkelungsschicht oder der jeweiligen Ablenkstruktur(A1, A2, A3) die jeweilige Ablenkcharakteristik ändert.

9. Kameravorrichtung (K) nach einem der vorhergehenden Ansprüche, **dadurch gekennzeichnet, dass**
wenigstens drei unterschiedliche Einkoppelbereiche (E1, E2, E3) vorgesehen sind.

## Claims

1. A camera device (K) for generating spatially representing image data of an environment, comprising
a carrier medium (T), which is formed as a light guide, and on which a coupling-in area (E1) and a coupling-out area (A) are arranged, wherein
the coupling-in area (E1) comprises a deflection structure (A1), which is formed to couple light (S), which is incident on the coupling-in area (E1) from the environment, into the carrier medium (T),
the carrier medium (T) is formed to transfer the light (S) coupled-in via the coupling-in area (E1) to the coupling-out area (A) by means of internal reflection, and
the coupling-out area (A) comprises a coupling-out deflection structure (A4), which is formed to couple the transferred light (S), which is incident on the coupling-out area (A), out of the carrier medium (T), and
an image capturing device (B) is applied to the coupling-out area (A), which is formed to capture the light coupled out of the carrier medium (T) and to generate image data (B1) therefrom, which is correlated with the light (S) of the environment incident on the coupling-in area (E1), wherein
at least one further coupling-in area (E2, E3) is arranged on the carrier medium (T), which each comprises a further deflection structure (A2, A3), which is formed to couple light (S), which is incident on the respective further coupling-in area (E2, E3) from the environment, into the carrier medium (T),
the carrier medium (T) is formed to transfer the light (S) coupled-in via the respective further coupling-in area (E2, E3) to the coupling-out area (A) by means of internal reflection,
the coupling-out deflection structure (A4) is formed to couple the transferred light (S) incident on the coupling-out area (A) out of the carrier medium (T),
the image capturing device (B) is formed to capture the light (S) of the respective further coupling-in area (E2, E3) coupled out of the carrier medium (T) and to generate respective further image data (B2, B3) therefrom, which is correlated with the light (S) of the environment incident on the respective further coupling-in area (E2, E3), and the image capturing device (B) is further formed to generate the spatially representing image data from the different image data (B1, B2, B3),
**characterized in that**
the camera device (K) additionally includes a separating device (D), which is formed to separate the light (S) incident on the different coupling-in areas (E1, E2, E3), and hereby the image capturing device (B) separately captures the light (S) incident on the different coupling-in areas (E1, E2, E3), wherein
at least one optical grating, in particular a holographic surface grating or a holographic volume grating, is provided as the respective deflection structure (A1, A2, A3, A4).

2. The camera device (K) according to claim 1,
**characterized in that**
the image capturing device (B) uses an image sensor (SB) for capturing the coupled-out light (S), on which the light (S) incident on the different coupling-in areas (E1, E2, E3) superimposes, or on which the light (S) incident on the different coupling-in areas (E1, E2, E3) successively impinges on the same surface area.

3. The camera device (K) according to claim 2,
**characterized in that**
the separating device (D) is formed to frequency-selectively separate the light (S) incident on the different coupling-in areas (E1, E2, E3) and the image sensor is formed as a color image sensor.

4. The camera device (K) according to claim 3,
**characterized in that**
the respective deflection structure (A1, A2, A3) of the different coupling-in areas (E1, E2, E3) is formed frequency-selective, and thus each of the deflection structures (A1, A2, A3) deflects only light (S) of a predetermined wavelength different from the remaining deflection structures (A1, A2, A3).

5. The camera device (K) according to claim 3 and 4,
**characterized in that**
the predetermined wavelength, which the respective deflection structure (A1, A2, A3) of the different coupling-in areas (E1, E2, E3) deflects, corresponds to a respective color filter wavelength of the color image sensor.

6. The camera device (K) according to any one of claims 1 to 2,
**characterized in that**
the separating device (D) is formed to temporally separate the light (S) incident on the different coupling-in areas (E1, E2, E3).

7. The camera device (K) according to claim 6,
**characterized in that**
the different coupling-in areas (E1, E2, E3) are formed switchable and hereby a deflection characteristic of the different coupling-in areas (E1, E2, E3) is changeable.

8. The camera device (K) according to claim 6 or 7,
**characterized in that**
a switchable darkening layer is provided or the respective deflection structure (A1, A2, A3) itself is formed switchable, such that the respective deflection characteristic changes depending on a switching state of the darkening layer or of the respective deflection structure (A1, A2, A3).

9. The camera device (K) according to any one of the preceding claims, **characterized in that**
at least three different coupling-in areas (E1, E2, E3) are provided.

## Revendications

1. Dispositif à caméra (K) pour générer des données d'image spatialement représentatives d'un environnement, comportant :
un support (T) réalisé sous la forme d'un conduit de lumière et sur lequel sont agencées une zone de couplage (E1) et une zone de découplage (A),
la zone de couplage (E1) comportant une structure de déviation (A1) conçue pour coupler dans le support (T) de la lumière (S) provenant de l'environnement qui est incidente sur la zone de couplage (E1),
le support (T) étant conçu pour transmettre à la zone de découplage (A), par réflexion interne, la lumière (S) couplée par l'intermédiaire de la zone de couplage (E1), et
la zone de découplage (A) comportant une structure de déviation de découplage (A4) conçue pour découpler à l'extérieur du support (T) la lumière (S) transmise qui est incidente sur la zone de découplage (A), et un dispositif d'acquisition d'image (B) est appliqué sur la zone de découplage (A), lequel dispositif est conçu pour détecter la lumière (S) découplée à l'extérieur du support (T) et pour générer à partir de celle-ci des données d'image (B1) qui sont corrélées avec la lumière (S) incidente sur la zone de couplage (E1) de l'environnement,
au moins une zone de couplage supplémentaire (E2, E3) étant agencée sur le support (T), laquelle zone comporte respectivement une structure de déviation supplémentaire (A2, A3) conçue pour coupler dans le support (T) la lumière (S) de l'environnement qui est incidente sur la zone de couplage supplémentaire (E2, E3) respective,
le support (T) étant conçu pour transmettre à la zone de découplage (A), par réflexion interne, par l'intermédiaire de la zone de couplage supplémentaire (E2, E3) respective, la lumière (S) couplée en entrée,
la structure de déviation de couplage (A4) étant conçue pour découpler à l'extérieur du support (T) la lumière (S) transmise qui est incidente sur la zone de découplage (A),
le dispositif d'acquisition d'image (B) étant conçu pour détecter la lumière (S) de la zone de couplage supplémentaire (E2, E3) respective découplée à l'extérieur du support (T) et pour générer à partir de celle-ci des données d'image supplémentaires (B2, B3) respectives qui sont corrélées avec la lumière (S) de l'environnement qui est incidente sur la zone de couplage supplémentaire (E2, E3) respective, et le dispositif d'acquisition d'image (B) est en outre conçu pour générer, à partir des différentes données d'image (B1, B2, B3), des données d'image spatialement représentatives,
**caractérisé en ce que**
le dispositif à caméra (K) comprend en outre un dispositif de séparation (D) conçu pour séparer la lumière (S) incidente sur les différentes zones de couplage (E1, E2, E3) et le dispositif d'acquisition d'image (B) détecte ainsi séparément la lumière (S) incidente sur les différentes zones de couplage (E1, E2, E3),
au moins un réseau optique, en particulier un réseau holographique surfacique ou un réseau holographique volumique, est fourni en tant que structure de déviation (A1, A2, A3, A4) respective.

2. Dispositif à caméra (K) selon la revendication 1,
**caractérisé en ce que**
le dispositif d'acquisition d'image (B) utilise un capteur d'image (SB) pour détecter la lumière (S) découplée, sur lequel la lumière (S) incidente sur les différentes zones de couplage (E1, E2, E3) se superpose, ou sur lequel la lumière (S) incidente sur les différentes zones de couplage (E1, E2, E3) frappe consécutivement la même région de surface.

3. Dispositif à caméra (K) selon la revendication 2,
**caractérisé en ce que**
le dispositif de séparation (D) est conçu pour séparer de manière sélective en fréquence la lumière (S) incidente sur les différentes zones de couplage (E1, E2, E3) et le capteur d'image est réalisé sous la forme d'un capteur d'image en couleurs.

4. Dispositif à caméra (K) selon la revendication 3,
**caractérisé en ce que**
la structure de déviation (A1, A2, A3) respective des différentes zones de couplage (E1, E2, E3) est sélective en fréquence, et ainsi chacune des structures de déviation (A1, A2, A3) dévie uniquement la lumière (S) d'une longueur d'onde prédéfinie différente des structures de déviation (A1, A2, A3) restantes.

5. Dispositif à caméra (K) selon les revendications 3 et 4,
**caractérisé en ce que**
la longueur d'onde prédéfinie, qui dévie la structure de déviation (A1, A2, A3) respective des différentes zones de couplage (E1, E2, E3), correspond à une longueur d'onde de filtre à couleur respective du capteur d'image en couleurs.

6. Dispositif à caméra (K) selon l'une des revendications 1 à 2,
**caractérisé en ce que**
le dispositif de séparation (D) est conçu pour séparer chronologiquement la lumière (S) incidente sur les différentes zones de couplage (E1, E2, E3).

7. Dispositif à caméra (K) selon la revendication 6,
**caractérisé en ce que**
les différentes zones de couplage (E1, E2, E3) sont conçues de manière commutable et ainsi une caractéristique de déviation des différentes zones de couplage (E1, E2, E3) peut être changée.

8. Dispositif à caméra (K) selon la revendication 6 ou 7,
**caractérisé en ce que**
une couche d'obscurcissement commutable est prévue, ou la structure de déviation (A1, A2, A3) respective est formée de manière auto-commutable de telle sorte que la caractéristique de déviation respective change en fonction d'un état de commutation de la couche d'obscurcissement ou de la structure de déviation (A1, A2, A3) respective.

9. Dispositif à caméra (K) selon l'une des revendications précédentes, **caractérisé en ce que**
au moins trois zones de couplage (E1, E2, E3) différentes sont prévues.
